# EUROPEAN PATENT APPLICATION

(11) **EP 4 350 601 A1**
(43) Date of publication of application: **10.04.2024**
(21) Application number: 22811216.5
(22) Date of filing: 18.05.2022
(51) Int. Cl.: G06Q 50/10

(54) **MATCHING SYSTEM**

(30) Priority: 27.05.2021 JP 2021089019
(71) Applicant: Niterra Co., Ltd., Nagoya-shi, Aichi 461-0005 (JP)
(72) Inventor: SUZUKI, Isao, Nagoya-shi, Aichi 461-0005 (JP); KOYAMA, Yasunori, Nagoya-shi, Aichi 461-0005 (JP); UCHIHASHI, Mimi, Nagoya-shi, Aichi 461-0005 (JP); HIRANO, Yoshiki, Nagoya-shi, Aichi 461-0005 (JP); HORIGUCHI, Takanori, Nagoya-shi, Aichi 461-0005 (JP)
(74) Representative: Grünecker Patent- und Rechtsanwälte PartG mbB
(86) International application number: PCT/JP2022/020637
(87) International publication number: WO 2022/249944

(57) **Abstract**

A matching system (100) includes a registration unit (41), a setting unit (42), an acquisition unit (43), and a confirmation unit (44). The registration unit (41) registers a parking place (PP) by a user of a first vehicle (C1). The setting unit (42) sets a destination (Ptg) of a user of a second vehicle (C2). The acquisition unit (43) acquires a current location (PC) of the second vehicle (C2). In a case where the user of the second vehicle (C2) drives the second vehicle (C2), and the current location (PC) of the second vehicle (C2) has switched from a state of not satisfying an approach condition set in advance for the destination (Ptg) to a state of satisfying the approach condition, the confirmation unit confirms intention of performing reception/passing of the parking place (PP) between the user of the second vehicle (C2) and the user of the first vehicle (C1) parked at the parking place (PP) that satisfies a predetermined near distance condition for the destination (Ptg) .

## Description

### TECHNICAL FIELD

The present invention relates to a matching system.

### BACKGROUND ART

Patent Document 1 discloses a method for passing a parking place of a first vehicle to a second vehicle. In this method, a release referral for a parking place of the first vehicle is received, and a search query for a parking place by a second vehicle is received. Then, the release referral is assigned to the search query, and the first vehicle and the second vehicle are matched. The matched first vehicle and second vehicle perform reception/passing of the parking place when they are in a viewable range from each other.

### PRIOR ART DOCUMENT

### PATENT DOCUMENT

Patent Document 1: Specification of German Patent Application Publication No. 102015216315

### SUMMARY OF THE INVENTION

### PROBLEM TO BE SOLVED BY THE INVENTION

In the method in Patent Document 1, in a case where the second vehicle matched with the first vehicle is far away from the parking place of the first vehicle, the arrival time of the second vehicle might greatly deviate from a scheduled arrival time due to the traffic condition or the like.

The present invention provides technology capable of preventing the time when the second vehicle arrives at the parking place of the first vehicle from deviating from the scheduled arrival time.

### MEANS FOR SOLVING THE PROBLEM

(1) A matching system of the present invention is a matching system for passing a parking place where a first vehicle is parked, to a second vehicle, the matching system including a registration unit, a setting unit, an acquisition unit, and a confirmation unit. The registration unit registers the parking place by a user of the first vehicle. The setting unit sets a destination of a user of the second vehicle. The acquisition unit acquires a current location of the second vehicle. In a case where the user of the second vehicle drives the second vehicle, and the current location has switched from a state of not satisfying an approach condition set in advance for the destination to a state of satisfying the approach condition, the confirmation unit confirms intention of performing reception/passing of the parking place between the user of the second vehicle and the user of the first vehicle parked at the parking place that satisfies a predetermined near distance condition for the destination.

In this matching system, after the second vehicle has approached the destination to a certain extent, intention of performing reception/passing of the parking place is confirmed between the user of the second vehicle and the user of the first vehicle around the destination. Thus, the distance required for the second vehicle to reach the parking place of the first vehicle is relatively short, and as a result, it is possible to prevent the arrival time of the second vehicle at the parking place of the first vehicle from deviating from the scheduled arrival time.

(2) The matching system may further include a calculation unit and a determination unit. The calculation unit calculates a required period until the second vehicle reaches the destination, based on the destination and the current location. The determination unit determines whether or not the current location satisfies the approach condition, based on the required period.

With this configuration, whether or not the current location of the second vehicle satisfies the approach condition can be determined based on the required period until the second vehicle reaches the destination. Thus, it is possible to prevent the user of the first vehicle from being kept waiting for a long time.

(3) The calculation unit may calculate the required period in consideration of traffic information.

With this configuration, the required period can be more accurately calculated in consideration of traffic information.

(4) The parking place may be a parking area.

With this configuration, the parking area where the first vehicle is parked can be passed to the second vehicle.

(5) The parking place may be on a road.

With this configuration, the parking place of the first vehicle parked on a road can be passed to the second vehicle.

(6) The matching system may notify the user of the first vehicle about an approach status of the second vehicle.

With this configuration, the user of the first vehicle can recognize the approach status of the second vehicle. Thus, it is possible to prevent the user of the first vehicle from being stressed by not knowing when the second vehicle will arrive.

(7) The matching system may further include a determination unit configured to determine whether or not the current location satisfies the approach condition, and when the current location is determined to satisfy the approach condition, search for the parking place that satisfies a matching condition with the second vehicle. The matching condition may include a condition based on a relationship between a feature of the second vehicle registered in advance and at least one of a feature of the parking place registered in advance and a feature of the first vehicle registered in advance.

With this configuration, the parking place is searched for based on the relationship between a feature of the second vehicle and at least one of a feature of the parking place and a feature of the first vehicle, and thus it is easy to search for the parking place suitable for the second vehicle.

(8) The matching system may further include a determination unit configured to determine whether or not the current location satisfies the approach condition, and when the current location is determined to satisfy the approach condition, search for the parking place that satisfies a matching condition with the second vehicle. In a case where more than one parking place is extracted through searching, the determination unit may perform predetermined processing based on a record of a behavior performed by the user of the first vehicle parked at each extracted parking place after confirmation of the intention of performing reception/passing in a past.

With this configuration, a record of a behavior performed by the user of the first vehicle after confirmation of intention of performing reception/passing in the past can be reflected in the current matching.

(9) The matching system, after the intention of performing reception/passing is confirmed by the confirmation unit, may notify the user of the first vehicle about information with which an outer appearance of the second vehicle can be identified.

With this configuration, the user of the first vehicle can easily recognize the outer appearance of the second vehicle, and thus the user of the first vehicle can easily find the second vehicle.

(10) The matching system, after the intention of performing reception/passing is confirmed by the confirmation unit, may notify the user of the second vehicle about information with which an outer appearance of the first vehicle can be identified.

With this configuration, the user of the second vehicle can easily recognize the outer appearance of the first vehicle, and thus the user of the second vehicle can easily find the first vehicle.

(11) The matching system may further include a determination unit configured to determine whether or not the current location satisfies the approach condition, and when the current location is determined to satisfy the approach condition, search for the parking place that satisfies a matching condition with the second vehicle. The matching system may further include a calculation unit configured to calculate a required period until the second vehicle reaches the destination, based on the destination and the current location. The matching condition may include a condition based on the required period calculated by the calculation unit and information indicating a desired time for passing of the user of the first vehicle.

With this configuration, the user of the first vehicle can set a desired time for passing in advance, and thus the period during which the user of the first vehicle waits until arrival of the second vehicle can be easily shortened.

### ADVANTAGEOUS EFFECTS OF THE INVENTION

According to the present invention, the time when the second vehicle arrives at the parking place of the first vehicle can be prevented from deviating from the scheduled arrival time.

### BRIEF DESCRIPTION OF THE DRAWINGS

[Fig. 1] Fig. 1 is an illustrative view exemplifying the positional relationship between parked first vehicles and a second vehicle present at a departure location.
[Fig. 2] Fig. 2 is a configuration diagram schematically exemplifying a matching system.
[Fig. 3] Fig. 3 is an example of a display image for notification about an approach status of the first vehicle.
[Fig. 4] Fig. 4 is a flowchart exemplifying flow of processing performed by the matching system.
[Fig. 5] Fig. 5 is an illustrative view exemplifying the positional relationship between the second vehicle of which the current location satisfies an approach condition, and first vehicles.

### MODES FOR CARRYING OUT THE INVENTION

### 1. First embodiment

### 1-1. Configuration of matching system 100

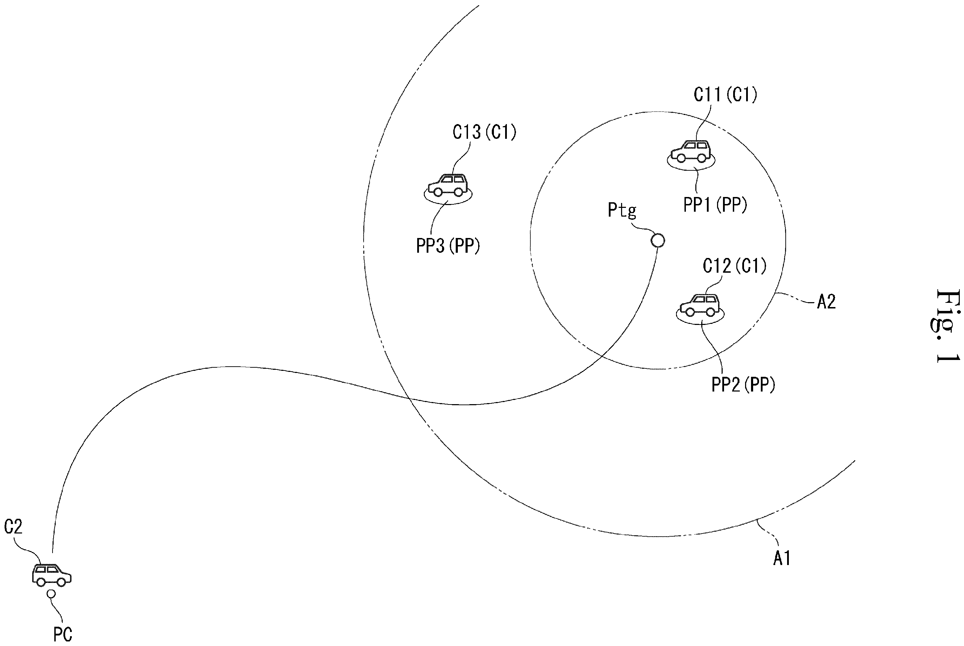

Fig. 1 shows first vehicles C1 parked at parking places PP and a second vehicle C2 heading to a destination Ptg. A matching system 100 is a system for passing the parking place PP where the first vehicle C1 is parked, to the second vehicle C2. The parking place PP may be a parking area or may be on a road.

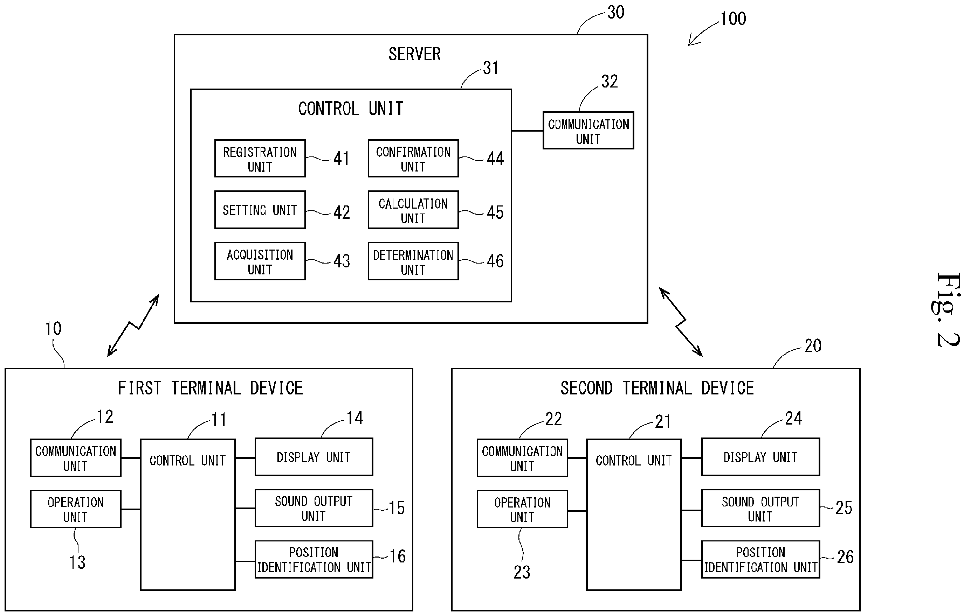

As shown in Fig. 2, the matching system 100 includes a first terminal device 10, a second terminal device 20, and a server 30. Each of the first terminal device 10 and the second terminal device 20 can wirelessly communicate with the server 30. In each of the first terminal device 10, the second terminal device 20, and the server 30, an application program for matching the first vehicle C1 and the second vehicle C2 is installed.

The first terminal device 10 is a device to be operated by a user of the first vehicle C1. In the present embodiment, the first terminal device 10 is a portable communication terminal such as a smartphone. The first terminal device 10 includes a control unit 11, a communication unit 12, an operation unit 13, a display unit 14, a sound output unit 15, and a position identification unit 16.

The control unit 11 is, for example, a micro controller unit (MCU), and includes a CPU, a ROM, a RAM, and the like. The control unit 11 executes the installed application program.

The communication unit 12 is configured to be capable of wirelessly communicating with the server 30. The communication unit 12 is an interface for wireless communication. The communication unit 12 performs wireless communication, for example, by a known communication method.

The operation unit 13 and the display unit 14 include, for example, a touch panel. The operation unit 13 includes a microphone. The operation unit 13 allows manual operation and voice-driven operation.

The sound output unit 15 outputs sound, and is, for example, a speaker.

The position identification unit 16 identifies the current location of the first terminal device 10, i.e., the current location of the first vehicle C1. The position identification unit 16 is, for example, a global positioning system (GPS) receiver, and receives radio waves from a GPS satellite and identifies the position of the first terminal device 10 through calculation.

The second terminal device 20 is a device to be operated by a user of the second vehicle C2. In the present embodiment, the second terminal device 20 is a portable communication terminal such as a smartphone. The second terminal device 20 includes a control unit 21, a communication unit 22, an operation unit 23, a display unit 24, a sound output unit 25, and a position identification unit 26. The control unit 21, the communication unit 22, the operation unit 23, the display unit 24, the sound output unit 25, and the position identification unit 26 have configurations similar to those of the control unit 11, the communication unit 12, the operation unit 13, the display unit 14, the sound output unit 15, and the position identification unit 16 of the first terminal device 10, and therefore the detailed description thereof is omitted.

The server 30 includes a control unit 31 and a communication unit 32. The control unit 31 is, for example, a micro controller unit (MCU), and includes a CPU, a ROM, a RAM, and the like. The control unit 31 executes the installed application program. The communication unit 32 is configured to be capable of wirelessly communicating with the first terminal device 10 and the second terminal device 20. The communication unit 32 is an interface for wireless communication. The communication unit 32 performs wireless communication, for example, by a known communication method.

The control unit 31 includes a registration unit 41, a setting unit 42, an acquisition unit 43, a confirmation unit 44, a calculation unit 45, and a determination unit 46.

The registration unit 41 registers the parking place PP of the first vehicle C1 in accordance with a registration operation by the operation unit 13 of the first terminal device 10. That is, when intention of registration is indicated by the first terminal device 10 from a user of the first vehicle C1, the registration unit 41 registers the place where the first vehicle C1 is parked, as the parking place PP. The registration operation includes an operation of inputting the parking place PP. The operation of inputting the parking place PP includes, for example, an operation of inputting the address of the parking place PP, and an operation of selecting the position of the first terminal device 10 as the parking place PP. In a case where an operation of selecting the position of the first terminal device 10 as the parking place PP is performed, the position identified by the position identification unit 16 of the first terminal device 10 is outputted as the parking place PP and then is registered in the registration unit 41.

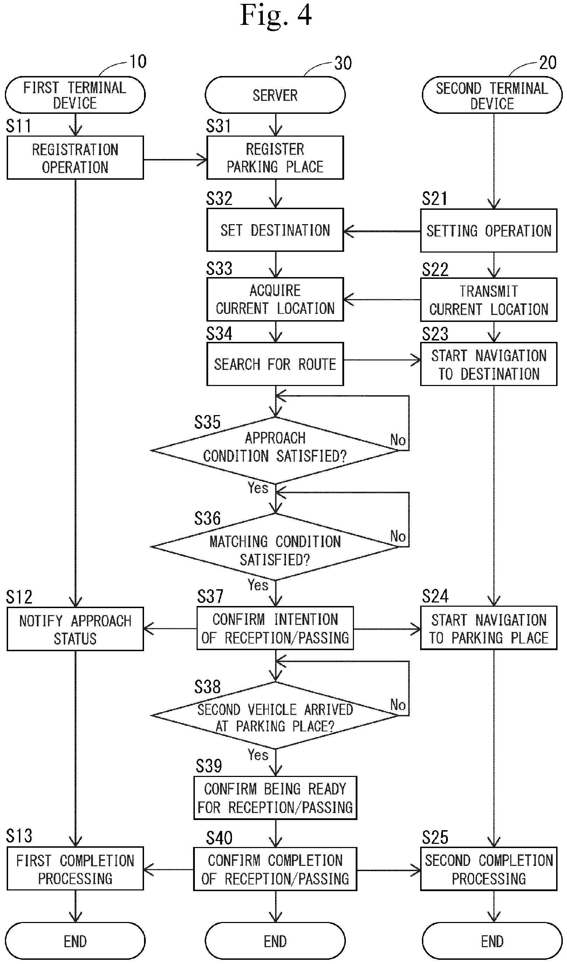

The registration operation includes a start-time input operation of inputting a start time when the parking place PP can be passed. The registration unit 41 stores the start time inputted through the start-time input operation, in association with the parking place PP. The start-time input operation includes, for example, an operation of selecting a moment just after registration, and an operation of inputting a time. In a case where an operation of selecting a moment just after registration is performed, matching processing (step S36 in Fig. 4) for searching for a counterpart to which the parking place PP of the first vehicle C1 is passed, is started from the moment just after registration. In a case where an operation of inputting a time is performed, the matching processing is started from when the inputted time has come.

The registration operation includes an allowable-period input operation of inputting an allowable standby period. The registration unit 41 stores the allowable standby period inputted through the allowable-period input operation, in association with the parking place PP. In a case where the allowable-period input operation has been performed, when the inputted allowable standby period has passed since the start of the matching processing, the registration unit 41 ends the matching processing and cancels the registration of the parking place PP.

The setting unit 42 sets the destination Ptg of the user of the second vehicle C2 in accordance with a setting operation by the operation unit 23 of the second terminal device 20. The setting operation includes an operation of inputting the destination Ptg. The setting unit 42 sets the destination Ptg inputted through the setting operation. The operation of inputting the destination Ptg includes, for example, an operation of inputting the address of the destination Ptg, and an operation of tapping on a map image displayed on the display unit 24.

The acquisition unit 43 acquires the current location of the second vehicle C2. Specifically, the acquisition unit 43 receives the position identified by the position identification unit 26 of the second terminal device 20, and acquires the received position as the current location PC of the second vehicle C2. After the destination Ptg is set, the acquisition unit 43 successively acquires the current location PC of the second vehicle C2.

In a case where the user of the second vehicle C2 drives the second vehicle C2 and the current location PC of the second vehicle C2 has switched from a state of not satisfying an approach condition set in advance for the destination Ptg to a state of satisfying the approach condition, the confirmation unit 44 confirms intention of performing reception/passing of the parking place PP between the user of the second vehicle C2, and the user of the first vehicle C1 parked at the parking place PP that satisfies a predetermined near distance condition for the destination Ptg.

The approach condition may be, for example, that a required period from the current location PC of the second vehicle C2 to the destination Ptg is within a predetermined approach period, or that the distance from the current location PC of the second vehicle C2 to the destination Ptg is within a predetermined approach distance. Alternatively, the approach condition may be that a required period from the current location PC of the second vehicle C2 to the parking place PP closest to the destination Ptg is within a predetermined approach period, or that the distance from the current location PC of the second vehicle C2 to the parking place PP closest to the destination Ptg is within a predetermined approach distance. The approach period and the approach distance may be arbitrarily set by the user or may be fixed values.

The near distance condition may be, for example, that a required period from the parking place PP of the first vehicle C1 to the destination Ptg is within a predetermined period set in advance, or that the distance from the parking place PP of the first vehicle C1 to the destination Ptg is within a predetermined distance set in advance. The predetermined period and the predetermined distance may be arbitrarily set by the user or may be fixed values.

The calculation unit 45 calculates a required period taken to move through a route between two locations by a vehicle. For example, by a known method, the calculation unit 45 identifies a route between two locations, and calculates a required period taken to move through the identified route by the vehicle. The calculation unit 45 calculates the required period in consideration of traffic information. The traffic information is information about congestion, construction, traffic regulation, accident, and the like. The traffic information is received from an external device via the communication unit 32. The traffic information includes road traffic information transmitted/received to/from a center which is a device outside a vehicle, such as a traffic information communication system, vehicle-to-vehicle communication information directly transmitted/received to/from another vehicle not via the center, and the like.

The calculation unit 45 calculates a required period until the second vehicle C2 reaches the destination Ptg, based on the destination Ptg and the current location PC of the second vehicle C2. After the destination Ptg is set, the calculation unit 45 successively calculates the required period until the second vehicle C2 reaches the destination Ptg, based on the current location PC of the second vehicle C2 which is sequentially updated.

The determination unit 46 determines whether or not the current location PC of the second vehicle C2 satisfies the approach condition, based on the required period calculated by the calculation unit 45. After the destination Ptg is set, the determination unit 46 repeatedly executes the determination as to whether or not the current location PC of the second vehicle C2 satisfies the approach condition, based on the required period which is sequentially updated. When the determination unit 46 determines that the current location PC of the second vehicle C2 satisfies the approach condition, the determination unit 46 searches for the parking place PP that satisfies the matching condition with the second vehicle C2. The matching condition will be described in detail later.

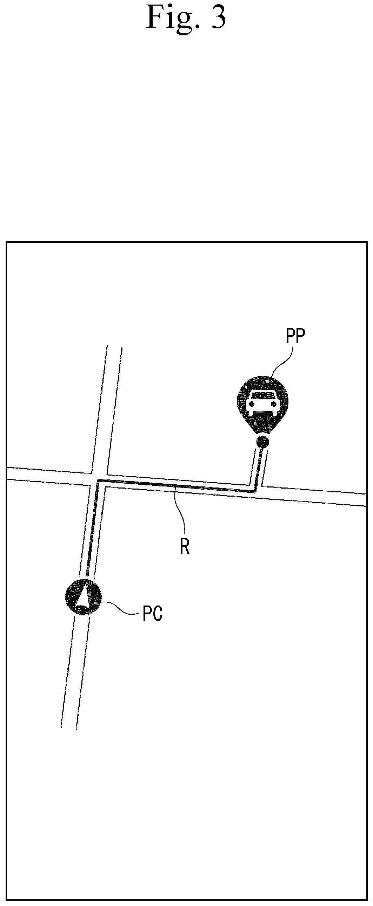

The confirmation unit 44 confirms intention of performing reception/passing of the searched parking place PP between the user of the second vehicle C2, and the user of the first vehicle C1 parked at the searched parking place PP. After the intention of reception/passing is confirmed by the confirmation unit 44, the first terminal device 10 notifies the user of the first vehicle C1 about the approach status of the second vehicle C2. For example, as shown in Fig. 3, the first terminal device 10 displays a map on the display unit 14, and displays, on the map, the parking place PP of the first vehicle C1, the current location PC of the second vehicle C2, and a route R through which the second vehicle C2 reaches the parking place PP of the first vehicle C1.

In addition, after the intention of reception/passing is confirmed by the confirmation unit 44, the first terminal device 10 notifies the user of the first vehicle C1 about information with which the outer appearance of the second vehicle C2 can be identified. The information with which the outer appearance of the second vehicle C2 can be identified is, for example, information indicating the type of the second vehicle C2, information indicating the body color of the second vehicle C2, and information indicating characters on a number plate of the second vehicle C2. By displaying the above information on the display unit 14, the first terminal device 10 notifies the user of the first vehicle C1 about the above information. In addition to display on the display unit 14, the first terminal device 10 may notify the user of the first vehicle C1 about the above information by outputting the above information from the sound output unit 15.

In addition, after the intention of reception/passing is confirmed by the confirmation unit 44, the second terminal device 20 notifies the user of the second vehicle C2 about information with which the outer appearance of the first vehicle C1 can be identified. The information with which the outer appearance of the first vehicle C1 can be identified is, for example, information indicating the type of the first vehicle C1, information indicating the body color of the first vehicle C1, and information indicating characters on a number plate of the first vehicle C1. By displaying the above information on the display unit 24, the second terminal device 20 notifies the user of the second vehicle C2 about the above information. In addition to display on the display unit 24, the second terminal device 20 may notify the user of the second vehicle C2 about the above information by outputting the above information from the sound output unit 25.

### 1-2. Operation of matching system 100

The first terminal device 10, the second terminal device 20, and the server 30 perform processing shown in Fig. 4. In step S11, when a registration operation is performed by the user of the first vehicle C1, the first terminal device 10 transmits information inputted through the registration operation, to the server 30. When the server 30 has received the information inputted through the registration operation, the server 30, in step S31, stores the received information and registers the parking place PP on the basis of the information.

In step S21, when a setting operation is performed by the user of the second vehicle C2, the second terminal device 20 transmits information inputted through the setting operation, to the server 30. When the server 30 has received the information inputted through the setting operation, the server 30, in step S32, stores the received information and sets the destination Ptg on the basis of the information.

In step S22, the second terminal device 20 transmits the position (the current location PC of the second vehicle C2) identified by the position identification unit 26, to the server 30. In step S33, the server 30 receives the position information from the second terminal device 20, thereby acquiring the current location PC of the second vehicle C2.

In step S34, the server 30 searches for a route from the current location PC of the second vehicle C2 to the destination Ptg on the basis of the destination Ptg and the current location PC of the second vehicle C2, and calculates a scheduled arrival time and a required period until arrival in the searched route. The server 30 transmits the searched route, the scheduled arrival time, and the required period to the second terminal device 20. When the second terminal device 20 has received from the server 30 the route, the scheduled arrival time, and the required period, the second terminal device 20, in step S23, starts navigation from the current location PC to the destination Ptg of the second vehicle C2 on the display unit 24.

In step S35, the server 30 determines whether or not the current location PC of the second vehicle C2 satisfies the approach condition. For example, in the state shown in Fig. 1, the second vehicle C2 is located outside an approach area A1 that satisfies the approach condition. In this case, the server 30 determines that the current location PC of the second vehicle C2 does not satisfy the approach condition. In a case where the server 30 determines that the current location PC of the second vehicle C2 does not satisfy the approach condition, the server 30 repeatedly determines whether or not the current location PC of the second vehicle C2 has switched from a state of not satisfying the approach condition to a state of satisfying the approach condition, based on the current location PC of the second vehicle C2 which is sequentially updated. During this period, matching with each user of first vehicles C11, C12, C13 parked at registered parking places PP1, PP2, PP3 is not performed.

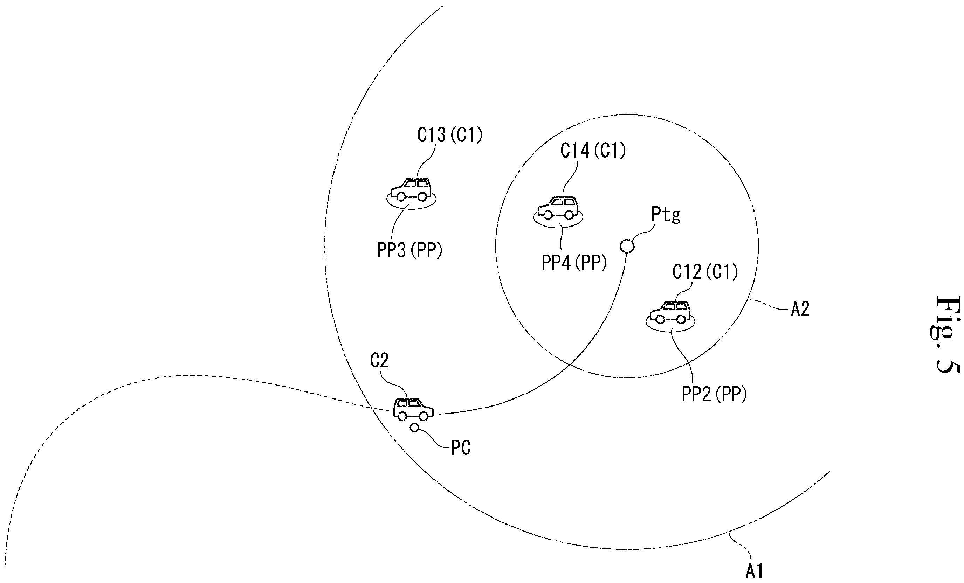

Thereafter, as shown in Fig. 5, when the second vehicle C2 enters the approach area A1, the current location PC of the second vehicle C2 satisfies the approach condition. When the server 30 determines that the current location PC of the second vehicle C2 satisfies the approach condition, the server 30, in step S36, searches for the parking place PP that satisfies the matching condition with the second vehicle C2 which has been determined to satisfy the approach condition.

The matching condition includes, for example, a condition that the parking place PP satisfies the near distance condition for the destination Ptg of the second vehicle C2. In the state shown in Fig. 5, parking places PP2, PP3, PP4 of first vehicles C12, C13, C14 are registered, and among the parking places PP2, PP3, PP4, only the parking places PP2, PP4 are located in a near distance area A2 that satisfies the near distance condition. Therefore, only the parking places PP2, PP4 satisfy the near distance condition for the destination Ptg of the second vehicle C2.

The matching condition includes, for example, a condition based on the relationship between a feature of the second vehicle C2 registered in advance and at least one of a feature of the parking place PP registered in advance and a feature of the first vehicle C1 registered in advance. The condition based on the relationship between the feature of the second vehicle C2 and the feature of the parking place PP is, for example, a condition satisfied in a case where the second vehicle C2 is an electric vehicle and the parking place PP is provided with charging equipment. Another example of the condition based on the relationship between the feature of the second vehicle C2 and the feature of the parking place PP is a condition satisfied in a case where the second vehicle C2 is a small-sized vehicle and the parking place PP is a parking place for a small-sized vehicle. The condition based on the relationship between the feature of the second vehicle C2 and the feature of the first vehicle C1 is, for example, a condition satisfied in a case where the entire length of the second vehicle C2 is the entire length of the first vehicle C1 or smaller. Another example of the condition based on the relationship between the feature of the second vehicle C2 and the feature of the first vehicle C1 is a condition satisfied in a case where the height of the second vehicle C2 is the height of the first vehicle C1 or smaller. The entire lengths or the heights may be identified from the vehicle types or models registered in advance. The feature of the parking place PP registered in advance may be information inputted by the current user, information inputted by a user in the past, or information acquired from outside of the matching system 100.

The matching condition includes, for example, a condition based on a required period calculated by the calculation unit 45 and information indicating a desired time for passing of the user of the first vehicle C1. The desired time for passing of the user of the first vehicle C1 is set by the user of the first vehicle C1. The setting method may be a method of setting a time or a method of setting how many minutes from now. In the server 30, a buffer period is set in advance. Based on the above required period, when the second vehicle C2 is expected to arrive within a period range extended from the desired time for passing by the buffer period, this matching condition is satisfied.

The matching condition includes, for example, a condition satisfied in a case where the user of the second vehicle C2 desires a free parking place PP and the parking place PP is free. The matching condition includes, for example, a condition satisfied in a case where the user of the second vehicle C2 desires a parking place PP not for parallel parking and the parking place PP is not for parallel parking. The information of the parking place PP (information indicating a free parking place or information indicating a parking place not for parallel parking) may be information inputted by the current user, information inputted by a user in the past, or information acquired from outside of the matching system 100.

The above matching condition may be classified into an essential condition and an optional condition optionally set by the user. In a case where the server 30 has extracted the parking place PP that satisfies the essential condition but does not satisfy the optional condition, the server 30 may notify the user of the second vehicle C2 about that information, and if permission from the user is obtained, the server 30 may determine that the matching condition is satisfied.

If more than one parking place PP is extracted through searching, the determination unit 46 of the server 30 performs predetermined processing based on a record of a behavior performed by the user of the first vehicle C1 parked at each extracted parking place PP after confirmation of the intention of performing reception/passing of the parking place PP in the past. The determination unit 46 calculates a cancellation rate of the user of the first vehicle C1 on the basis of a record of a behavior of the user of the first vehicle C1. The determination unit 46 performs the predetermined processing on the basis of the cancellation rate of the user of the first vehicle C1. The cancellation rate is calculated as, for example, "number of times of cancellation" / "number of times intention of performing reception/passing of the parking place PP was confirmed". The "number of times of cancellation" is the number of times the user of the first vehicle C1 has performed a cancellation operation by the first terminal device 10. The predetermined processing is, for example, processing of preferentially making matching with the user whose cancellation rate is lowest. Another example of the predetermined processing is processing of presenting, to the user of the second vehicle C2, the parking place PP of each user in the ascending order of the lowest cancellation rates of the users. The presentation method is, for example, a method of displaying the above information on the display unit 24 of the second terminal device 20. The method for presentation in the ascending order of the cancellation rates includes not only a method of displaying one by one in the ascending order of the cancellation rates but also a method of collectively displaying a plurality of parking places PP so as to be arranged in the ascending order of the cancellation rates.

In a case where the parking place PP that satisfies the matching condition cannot be extracted, the server 30 repeatedly searches for the parking place PP that satisfies the matching condition. The user of the second vehicle C2 selects a desired parking place PP from the extracted parking places PP.

In a case where more than one parking place PP that satisfies the matching condition is extracted, the server 30 may select one parking place PP based on a priority condition set in advance. The priority condition may be, for example, that the parking place PP is closest to the destination Ptg, or that evaluation of the user of the first vehicle C1 is high. The priority condition may be set by the user.

When the parking place PP is selected by the user of the second vehicle C2, the server 30, in step S37, confirms intention of reception/passing of the selected parking place PP, for both of the user of the first vehicle C1 and the user of the second vehicle C2. For example, the server 30 causes the display unit 14 of the first terminal device 10 and the display unit 24 of the second terminal device 20 to display confirmation buttons, and if both confirmation buttons are operated, the server 30 determines that the users have intention of reception/passing.

If the server 30 determines that both of the user of the first vehicle C1 and the user of the second vehicle C2 have intention of reception/passing, in step S12, the server 30 causes the first terminal device 10 to notify the user of the first vehicle C1 about the approach status of the second vehicle C2 (see Fig. 3). In addition, in step S24, the server 30 causes the second terminal device 20 to start navigation to the parking place PP of the first vehicle C1.

After step S37, the server 30, in step S38, determines whether or not the second vehicle C2 has arrived at the parking place PP of the first vehicle C1. The server 30 determines that the second vehicle C2 has arrived at the parking place PP, for example, when the second vehicle C2 has reached within a predetermined radius set in advance around the parking place PP. If the server 30 determines that the second vehicle C2 has not arrived at the parking place PP of the first vehicle C1, the server 30 repeats step S38.

When the server 30 determines that the second vehicle C2 has arrived at the parking place PP of the first vehicle C1, the server 30, in step S39, confirms whether or not both of the user of the first vehicle C1 and the user of the second vehicle C2 have become ready for reception/passing. For example, the server 30 causes the display unit 14 of the first terminal device 10 and the display unit 24 of the second terminal device 20 to display confirmation buttons for confirming that the respective users have become ready for reception/passing, and if both confirmation buttons are operated, the server 30 determines that both users have become ready for reception/passing.

After determining that both users have become ready for reception/passing, the server 30, in step S40, confirms whether or not the reception/passing is completed. For example, the server 30 causes the display unit 14 of the first terminal device 10 and the display unit 24 of the second terminal device 20 to display confirmation buttons for confirming that the reception/passing is completed, and if both confirmation buttons are operated, the server 30 determines that the reception/passing is completed.

When having determined that the reception/passing is completed, the server 30, in step S13, causes the first terminal device 10 to execute first completion processing, and in step S25, the server 30 causes the second terminal device 20 to execute second completion processing. The first completion processing is, for example, processing for evaluating the current matching, processing for evaluating the user of the second vehicle C2, and processing of displaying a current reward. The second completion processing is, for example, processing for evaluating the current matching, processing for evaluating the user of the first vehicle C1, and processing of charging for payment for this time.

### 1-3. Effects of first embodiment

In the matching system 100 of the first embodiment, after the second vehicle C2 has approached the destination Ptg to a certain extent, intention of performing reception/passing of the parking place PP is confirmed between the user of the second vehicle C2 and the user of the first vehicle C1 around the destination Ptg. Thus, the distance required for the second vehicle C2 to reach the parking place PP of the first vehicle C1 is relatively short, and as a result, it is possible to prevent the arrival time of the second vehicle C2 at the parking place PP of the first vehicle C1 from deviating from the scheduled arrival time.

Further, with the matching system 100, whether or not the current location PC of the second vehicle C2 satisfies the approach condition can be determined based on the required period until the second vehicle C2 reaches the destination Ptg. Thus, it is possible to prevent the user of the first vehicle C1 from being kept waiting for a long time.

Further, with the matching system 100, the required period can be more accurately calculated in consideration of traffic information.

Further, the matching system 100 notifies the user of the first vehicle C1 about the approach status of the second vehicle C2. Thus, the user of the first vehicle C1 can recognize the approach status of the second vehicle C2. Therefore, it is possible to prevent the user of the first vehicle C1 from being stressed by not knowing when the second vehicle C2 will arrive.

Further, with the matching system 100, the parking place PP can be searched for based on the relationship between a feature of the second vehicle C2 and at least one of a feature of the parking place PP and a feature of the first vehicle C1, and thus it is easy to search for the parking place PP suitable for the second vehicle C2.

Further, with the matching system 100, a record of a past behavior of the user of the first vehicle C1 after confirmation of intention of performing reception/passing of the parking place PP can be reflected in the current matching.

Further, with the matching system 100, the user of the first vehicle C1 can easily recognize the outer appearance of the second vehicle C2, and thus the user of the first vehicle C1 can easily find the second vehicle C2.

Further, with the matching system 100, the user of the second vehicle C2 can easily recognize the outer appearance of the first vehicle C1, and thus the user of the second vehicle C2 can easily find the first vehicle C1.

Further, with the matching system 100, the user of the first vehicle C1 can set a desired time for passing in advance, and thus the period during which the user of the first vehicle C1 waits until arrival of the second vehicle C2 can be easily shortened.

### <Other embodiments>

The present invention is not limited to the embodiment described in the above description with reference to the drawings, and for example, the following embodiments are also included in the technical scope of the present invention. In addition, various features of the above embodiment and embodiments described below may be freely combined unless combined features contradict each other.

In the above embodiment, the first terminal device and the second terminal device are portable communication terminals. However, each of them may be another device, e.g., on-vehicle equipment.

In the above embodiment, the first terminal device and the second terminal device have the same configuration. However, they may have different configurations.

It should be understood that the embodiments disclosed herein are illustrative in all aspects and thus are not restrictive. The scope of the present invention is not limited to the embodiments disclosed herein, and is intended to include all modifications within a scope defined in the claims or a scope equivalent to the claims.

### DESCRIPTION OF REFERENCE NUMERALS

- 41:: registration unit
- 42:: setting unit
- 43:: acquisition unit
- 44:: confirmation unit
- 45:: calculation unit
- 46:: determination unit
- 100:: matching system
- C1:: first vehicle
- C11:: first vehicle
- C12:: first vehicle
- C13:: first vehicle
- C14:: first vehicle
- C2:: second vehicle
- PC:: current location of second vehicle
- PP:: parking place
- PP1:: parking place
- PP2:: parking place
- PP3:: parking place
- PP4:: parking place
- Ptg:: destination

## Claims

1. A matching system for passing a parking place where a first vehicle is parked, to a second vehicle, the matching system comprising:
a registration unit configured to register the parking place by a user of the first vehicle;
a setting unit configured to set a destination of a user of the second vehicle;
an acquisition unit configured to acquire a current location of the second vehicle; and
a confirmation unit configured to, in a case where the user of the second vehicle drives the second vehicle and the current location has switched from a state of not satisfying an approach condition set in advance for the destination to a state of satisfying the approach condition, confirm intention of performing reception/passing of the parking place between the user of the second vehicle and the user of the first vehicle parked at the parking place that satisfies a predetermined near distance condition for the destination.

2. The matching system according to claim 1, further comprising:
a calculation unit configured to calculate a required period until the second vehicle reaches the destination, based on the destination and the current location; and
a determination unit configured to determine whether or not the current location satisfies the approach condition, based on the required period.

3. The matching system according to claim 2, wherein
the calculation unit calculates the required period in consideration of traffic information.

4. The matching system according to any one of claims 1 to 3, wherein
the parking place is a parking area.

5. The matching system according to any one of claims 1 to 3, wherein
the parking place is on a road.

6. The matching system according to claim 1 or 2, being configured to notify the user of the first vehicle about an approach status of the second vehicle.

7. The matching system according to claim 1 or 2, further comprising a determination unit configured to determine whether or not the current location satisfies the approach condition, and when the current location is determined to satisfy the approach condition, search for the parking place that satisfies a matching condition with the second vehicle, wherein
the matching condition includes a condition based on a relationship between a feature of the second vehicle registered in advance and at least one of a feature of the parking place registered in advance and a feature of the first vehicle registered in advance.

8. The matching system according to claim 1 or 2, further comprising a determination unit configured to determine whether or not the current location satisfies the approach condition, and when the current location is determined to satisfy the approach condition, search for the parking place that satisfies a matching condition with the second vehicle, wherein
in a case where more than one parking place is extracted through searching, the determination unit performs predetermined processing based on a record of a behavior performed by the user of the first vehicle parked at each extracted parking place after confirmation of the intention of performing reception/passing in a past.

9. The matching system according to claim 1 or 2, being configured to, after the intention of performing reception/passing is confirmed by the confirmation unit, notify the user of the first vehicle about information with which an outer appearance of the second vehicle can be identified.

10. The matching system according to claim 1 or 2, being configured to, after the intention of performing reception/passing is confirmed by the confirmation unit, notify the user of the second vehicle about information with which an outer appearance of the first vehicle can be identified.

11. The matching system according to claim 1 or 2, further comprising:
a determination unit configured to determine whether or not the current location satisfies the approach condition, and when the current location is determined to satisfy the approach condition, search for the parking place that satisfies a matching condition with the second vehicle; and
a calculation unit configured to calculate a required period until the second vehicle reaches the destination, based on the destination and the current location, wherein
the matching condition includes a condition based on the required period calculated by the calculation unit and information indicating a desired time for passing of the user of the first vehicle.
